# EUROPÄISCHE PATENTSCHRIFT

(11) **EP 1 694 594 B1**
(45) Veröffentlichungstag und Bekanntmachung des Hinweises auf die Patenterteilung: **05.08.2020**
(21) Anmeldenummer: 04802620.7
(22) Anmeldetag: 16.10.2004
(51) Int. Cl.: B66B 11/04

(54) **GETRIEBELOSES UND KOMPAKTES AUSSENLÄUFERANTRIEBSSYSTEM**
GEARLESS, COMPACT DRIVE SYSTEM COMPRISING AN EXTERNAL ROTOR
SYSTEME D'ENTRAINEMENT DE ROTOR EXTERNE, SANS ENGRENAGE, COMPACT

(30) Priorität: 29.11.2003 DE 20318523 U; 28.09.2004 DE 202004015064 U
(43) Veröffentlichungstag der Anmeldung: 30.08.2006
(73) Patentinhaber: Inventio AG, 6052 Hergiswil (CH)
(72) Erfinder: BLOCHER, Hans-Joachim, 01936 Königsbrück (DE)
(86) Internationale Anmeldenummer: PCT/DE2004/002306
(87) Internationale Veröffentlichungsnummer: WO 2005/054108

(56) Entgegenhaltungen:
- EP-A- 0 688 735
- EP-A- 0 735 648
- EP-A- 0 878 430
- DE-A1- 4 233 759
- DE-A1- 19 634 629
- DE-A1- 19 910 925
- DE-C1- 19 958 545
- US-B1- 6 199 666

## Beschreibung

Getriebeloses und kompaktes Außenläuferantriebssystem insbesondere für Personen- und Lastenaufzüge.

In der DE 4233759 wurde bereits ein getriebeloser und kompakter Hebezeugantrieb beschrieben, dessen Treibscheibe, Außenläufer des Elektromotors und die Bremse ein gemeinsames Gehäuse bilden. Der Außenläufer des Elektromotors ist dabei innerhalb der Treibscheibe angeordnet. Die Treibscheibe und die Bremse sind als gemeinsames Gehäuse mindestens an zwei Stellen an einer drehmomentenfreien Achse gelagert. Der Vorteil dieser Lösung besteht neben der getriebelosen Ausführung in der drehmomentenfreien Achse.

In der DE 199 10 925 wird ein weiterer getriebeloser und kompakter Hebezeugantrieb beschrieben, der aus einer walzenförmigen Trägereinheit besteht, auf dessen Außenumfang der Ständer des Elektromotors angeordnet ist und auf einer Seite eine kreisrunde Nut zur Aufnahme einer in dieser Nut mit der Innenwand gelagerten Treibscheibe besitzt, wobei die Treibscheibe kreisringförmig mit am inneren und äußeren Umfang des Kreisringes rechtwinklig angeordneten Wänden ausgebildet ist und die äußere Wand am inneren Umfang den Außenläufer des Elektromotors und auf dem Außenumfang die Seilrillen trägt und die äußere Wand der Treibscheibe insgesamt den Ständer des Elektromotors umfasst, wobei zwischen dem Außenläufer des Elektromotors und dem Ständer des Elektromotors ein elektromaschinentypischer Luftspalt angeordnet ist.

In der DE 203 18 523 wurde bereits ein getriebeloser und kompakter Hebezeugantrieb vorgeschlagen, bei dem der Ständer des Elektromotors an einer ersten Lagerendplatte befestigt ist. Der Außenläufer des Elektromotors ist auf der Seite der Ständerbefestigung am Ständer und auf der anderen Seite in einer zweiten Lagerendplatte gelagert. Der Außenläufer besitzt am inneren Umfang Permanentmagnete und am äußeren Umfang ein Treibrohr.

Ein weiteres Beispiel eines Aussenläuferantriebssystem ist aus der DE19958545 bekannt.

Der Erfindung liegt die Aufgabe zugrunde, ein Antriebssystem zu schaffen, das in seinem Außendurchmesser noch kleiner als bisher üblich gehalten ist, eine Vereinfachung und den Wegfall bisher üblicher, einzelner Bauteile des Antriebssystems ermöglicht, den Verschleiß von Treibrohr und Seil minimiert und durch eine zusätzliche Luftkühlung gekennzeichnet ist, die durch einfache mechanische Veränderungen am Antrieb wirksam oder unwirksam eingestellt werden kann.

Die mit der Erfindung erzielten Vorteile bestehen insbesondere darin, dass neben den bereits in der Aufgabenstellung angeführten Vorteilen Materialeinsparungen und Arbeitszeiteinsparungen bei der Herstellung des Außenläuferantriebssystems erreicht werden. Bei der Anordnung der Seilführung nach oben und der Bremsen am Kulminationspunkt des Treibrohrs wirken die Kräfte des Seiles und der Bremsen gegeneinander. Somit werden die Lager der Maschine zeitweilig entlastet bzw. nicht noch stärker belastet, was bei einer Überlagerung der Kräfte eintreten würde. Zusätzlich können noch Bremsen am Wellenstumpf außerhalb der Maschine und/oder im Inneren der Maschine angeordnet werden. Ein Austausch des Treibrohres und der Ersatz mit einem anderen Treibmittel ist möglich. Weiterhin kann eine verstärkte Luftkühlung durch Öffnungen bzw. Durchbrüche in den Lagerendplatten und den Lagerschilden der Maschine erreicht werden. Durch einfache mechanische Veränderungen vor Ort am Aufstellungsort kann die Maschine von fehlender zusätzlicher Luftkühlung auf eine verstärkte Luftkühlung umgerüstet werden. Bei einer mehrteiligen Ausführung des Treibrohres lässt sich das Rollieren des Rohlings leichter realisieren.

Vorteilhafte Ausgestaltungen des Außenläuferantriebssystems sind in den Ansprüchen 2 bis 17 dargestellt. Bei der Weiterbildung nach Anspruch 2 handelt es sich um einen Nebenanspruch, bei dem der Ständer nicht nur an einer Seite an einer Lagerendplatte fest verankert ist. Auf der anderen Seite ist der Ständer durch einen Ansatz des Lagerschildes in einer zweiten Lagerendplatte gelagert. In Anspruch 3 ist eine Lösung angegeben, die die Anbringung einer zusätzlichen Treibscheibe ermöglicht. Dies ermöglicht einen erweiterten Einsatz des Hebezeugantriebes. Mit der Anordnung eines Gebers an der Bedienseite der Maschine nach Anspruch 4 und der Verbindung über eine Geberwelle zur auf der anderen Seite der Maschine liegenden und sich drehenden Welle mit Ansatz, ist eine elegante Lösung gefunden worden, um über ein drehendes Teil der Maschine Aussagen zur Bewegung der Maschine bzw. des Lastkorbes zu erhalten. Diese Geberwelle kann nach Anspruch 5 in gewissen Abständen einen verjüngten Durchmesser besitzen. Hierdurch wird erreicht, dass der Geber biegeelastisch einstellbar und drehmomentenstabil ist. Bei der Weiterbildung nach Anspruch 6 ist an der Außenseite der Lagerendplatte, die das Lagerschild des Außenläufers trägt, ein Geber montiert. Hierzu schließt der Ansatz des Lagerschildes mit der Lagerendplatte an der Außenseite ab. Nach Anspruch 7 sind an den Außenseiten der Lagerendplatten die sonst üblichen Abdeck- und Abdichtdeckel oder -ringe im Bereich der Durchbrüche für den Ständer des Elektromotors oder der Welle mit Ansatz oder des Ansatzes des Lagerschildes weggelassen worden. Mit der Weiterbildung nach Anspruch 8 wird durch die Anbringung von elektromagnetischen Vorrichtungen im Bereich der Seilrillen des Treibrohrs ein elektromagnetisches Feld aufgebaut, welches mittels der magnetischen Kräfte das Seil an den Nutgrund der Seilrillen zieht. Dies erweist sich als besonders vorteilhaft für Seile mit einem kleinen Seildurchmesser. Nach Anspruch 9 kann die Kabelzuführung für die Wicklung des Ständers des Elektromotors unterhalb durch das Blechpaket unterhalb des Lagers und durch die erste Lagerendplatte nach außen geführt sein. Von hier führen dann die Kabel zum Klemmkasten. Bei der Anordnung der Bremsen am Kulminationspunkt des Treibrohrs bzw. des Außenläufers nach Anspruch 10 werden teilweise die Kräfte des Seiles und der Bremsen gegenseitig aufgehoben. Zumindest werden die auf die Lager wirkenden Kräfte beim Bremsvorgang nicht noch verstärkt. Selbstverständlich können auch noch weitere Bremsen am Außenumfang verteilt angeordnet sein. Nach Anspruch 11 können die Bremsen zusätzlich oder nur an der Welle mit Ansatz außerhalb des Elektromotors angeordnet sein. Aber auch zwischen der Lagerendplatte und dem Elektromotor auf der Seite der Welle mit Ansatz, also im Inneren des Außenläuferantriebssystems können Bremsen, z. B. in der Ausführungsform einer Federdruckbremse mit der Bremswirkung in Richtung Lagerschild des Elektromotors oder in Richtung Außenumfang gegen eine Bremsplatte angeordnet sein. Hierdurch lässt sich die Bremswirkung des Antriebssystems optimieren. Zur Verbesserung der Luftkühlung im Elektromotor des Außenläuferantriebssystems sind nach Anspruch 12 in der ersten Lagerendplatte und/oder am dazugehörigen Lagerschild des Elektromotors Durchbrüche vorgesehen, die einen Luftaustausch der warmen Luft im Elektromotor nach außerhalb ermöglicht. Bei der Weiterbildung nach Anspruch 13 kann die gegenüberliegende Seite der Ständerbefestigung des Antriebssystems ebenfalls Durchbrüche besitzen. Auch hier können die Durchbrüche nur im Lagerschild angeordnet sein oder im Lagerschild und in der Lagerendplatte. Zur besseren Luftführung innerhalb der Maschine kann nach Anspruch 14 im Außenbereich zwischen Lagerendplatte und Elektromotor in den sonst offenen Spalten eine Abdichtung in Form von Labyrinthringen oder -scheiben vorgesehen sein. Hierdurch wird der Luftaustritt aus der Maschine, bevor die Luft das Innere des Elektromotors durchströmt hat, verhindert. Bei der Weiterbildung nach Anspruch 15 können die Durchbrüche an der Innenseite der Lagerendplatten oder an der Außenseite der Lagerschilde abnehmbare Abdeckungen besitzen, die an speziellen Fixierpunkten an der Maschine fixierbar sind. Hierdurch kann die Maschine generell als geschlossene Maschine ausgeliefert werden und durch den Kunden bei einem entsprechend geeigneten Einsatzort problemlos in eine offene Maschine gewandelt werden. Nach Anspruch 16 können an der Innenseite der Lagerschilde im Bereich der Durchbrüche Luftleitbleche angeordnet sein, die die Kühlluftströmung zu speziellen Bereichen im Inneren der Maschine hinleiten. Bei der Weiterbildung nach Anspruch 17 besteht der Außenläufer als Treibrohr mindestens aus zwei Hohlzylinderteilen. Die Hohlzylinderteile besitzen an ihren Stoßstellen jeweils einen Bund, der jedoch jeweils am anderen Hohlzylinderteil spiegelverkehrt ausgeführt ist. Damit greift ein Hohlzylinderteil über das andere Hohlzylinderteil und es wird eine ausreichende Stabilität erreicht. Insgesamt wird damit eine einfachere Technologie beim Rollieren der einzelnen Holzylinderteile ermöglicht.

Die Erfindung wird im Folgenden anhand der Zeichnung näher erläutert. Es zeigen:

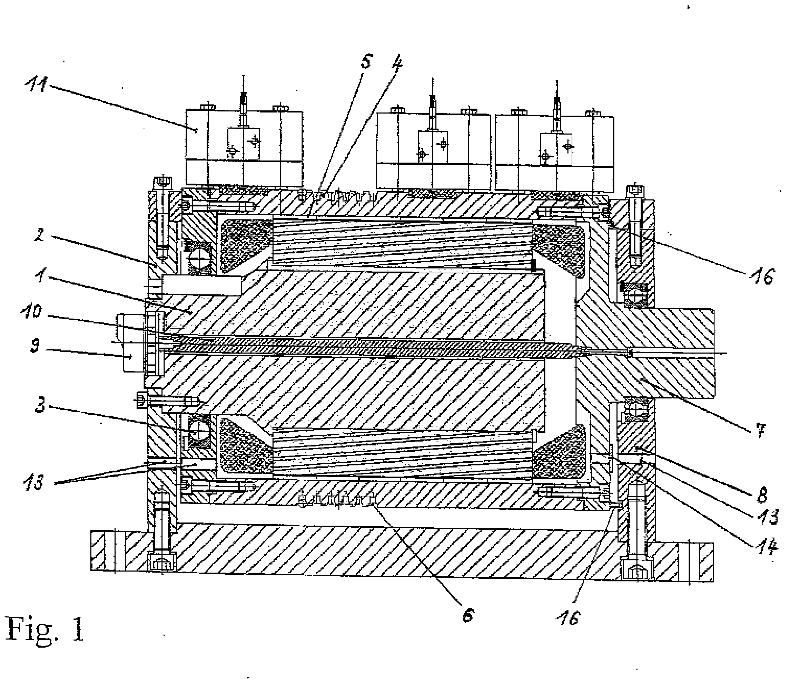

Fig. 1 einen Schnitt durch das Außenläuferantriebssystem und

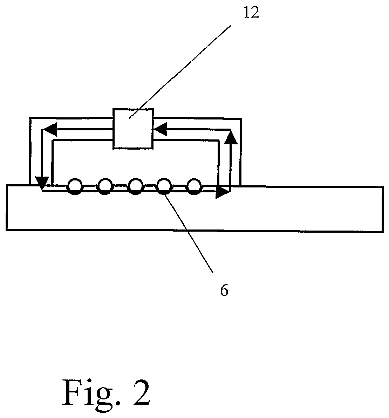

Fig. 2 die schematische Darstellung der Vorrichtung zur Erzeugung eines Elektromagnetfeldes und der Feldlinien durch die Treibscheibe und das Seil,
Fig. 3 einen Schnitt durch das Außenläuferantriebssystem mit zusätzlichen Innenbremsen und
Fig. 4 einen Schnitt durch das Außenläuferantriebssystem mit einer zusätzlichen Lagerung des Ständers des Elektromotors.

Der Ständer des Elektromotors 1 ist auf einer Seite an einer ersten Lagerendplatte 2 fest verankert. Die erste Lagerendplatte 2 und die zweite Lagerendplatte 8, die sich auf der gegenüberliegenden Seite des Ständers des Elektromotors 1 befindet, stehen auf einer gemeinsamen Grundplatte. Der Ständer des Elektromotors 1 trägt auf der ersten Lagerendplatte 2 ein Lager 3 des Außenläufers 4 des Elektromotors 1. Am inneren Umfang des Außenläufers 4 sind Permanentmagnete 5 und am äußeren Umfang sind Seilrillen 6 des Treibrohrs angeordnet. Die Seilrillen 6 entfallen bei Einsatz eines anderen Treibmittels.

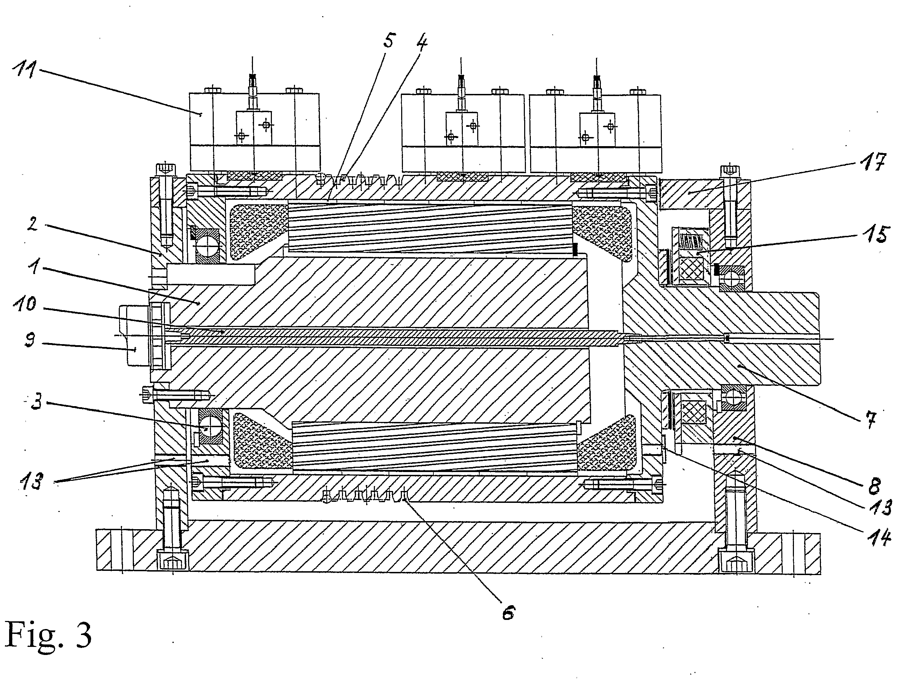

Der Außenläufer 4 besitzt auf der gegenüberliegenden Seite des Lagers 3 eine Welle mit Ansatz 7, die in der zweiten Lagerendplatte 8 gelagert ist. Diese Welle mit Ansatz 7 ist in einem der Ausführungsbeispiele durch die zweite Lagerendplatte 8 hindurchgeführt. Auf der Außenseite kann eine zusätzliche Treibscheibe (in der Zeichnung nicht dargestellt) befestigt sein. Auf der Außenseite der ersten Lagerendplatte 2 ist ein Geber 9 mittig montiert. Dieser Geber 9 ist mit einer drehmomentenstabilen Geberwelle 10 verbunden, die durch ein Durchgangsloch des Ständers des Elektromotors 1 bis zur Welle mit Ansatz 7 geführt und dort fest verbunden ist. Dies ist im Ausführungsbeispiel mit einem mittig durch die Welle mit Ansatz 7 geführten Durchgangsloch realisiert. Unterhalb, innerhalb und/oder oberhalb des Treibrohrs ist eine elektromagnetische Vorrichtung zur Erzeugung eines Elektromagnetfeldes 12 angeordnet. Diese Vorrichtung erzeugt Feldlinien, die durch den Nutgrund der Seilrillen 6 und durch die Seilschlaufen des Seiles verlaufen und somit ein Anpressen des Seiles am Nutgrund der Seilrillen 6 ermöglicht. Dies ist besonders bei kleinen Seildurchmessern erwünscht. Es ist logisch, dass die Seilrillen 6 durch andere Treibmittel ersetzbar sind. Die Kabelzuführung für die Wicklung des Ständers des Elektromotors 1 ist durch das Ständerblechpaket unterhalb des Lagers 3 und durch die erste Lagerendplatte 2 nach außen geführt. Die Bremsen 11 sind bei einer Seilführung nach oben am Kulminationspunkt an der Außenseite am Außenläufer 4 angeordnet. Hierdurch heben sich die entgegengesetzt wirkenden Kräfte beim Bremsen auf und es wird keine zusätzliche Kraft auf die Lager wirken und diese damit belasten. Ansonsten können die Bremsen 11 auch noch seitlich am Umfang auf der Maschine angeordnet sein. Außerdem ist auch eine Anordnung der Bremsen 11 an der Welle mit Ansatz 7 außerhalb des Elektromotors 1 bzw. der zweiten Lagerendplatte 8 möglich. Eine weitere Anordnungsmöglichkeit der Bremsen 11 als Innenbremse 15 ist in der Fig. 3 angedeutet. Hier liegt eine Federdruckbremse 15 zwischen der Lagerendplatte 8 und dem Elektromotor 1. Die Bremswirkung kann einmal gegen das Lagerschild des Elektromotors 1 gerichtet sein oder in einer anderen Ausführungsform von Innen gegen den Außenumfang gegen eine Bremsplatte 17.

Die erste Lagerendplatte 2 besitzt Durchbrüche 13 zur zielgerichteten Kühlluftführung in das Innere des Antriebssystems. Auch das dazugehörige Lagerschild des Außenläufers 4 besitzt über dem Lager 3 Durchbrüche 13. Auf der anderen Lagerseite des Elektromotors 1 besitzt die zweite Lagerendplatte 8 und/oder das dahinterliegende Lagerschild des Außenläufers 4 ebenfalls Durchbrüche 13. Es ist auch nur eine einseitige Ausführung mit den Durchbrüchen 13 denkbar. Dies schränkt jedoch die Kühlwirksamkeit ein. Zur weiteren Erhöhung der Kühlleistung können zwischen den Lagerendplatten 2 und 8 und dem Elektromotor 1 im Außenbereich Abdichtungen 16 vorgesehen sein. Dies erfolgt durch eine Labyrinthsystem.

An der Außenseite der Durchbrüche 13 der Lagerschilde oder an der Innenseite der Durchbrüche 13 an den Lagerendplatten 2, 8 sind abnehmbare Abdeckungen 14, vorzugsweise in Scheibenform angeschraubt. Diese Abdeckungen 14 sind generell mit der Auslieferung der Maschine montiert und können problemlos demontiert und an speziellen Punkten, z. B. an den Lagerendplatten 2, 8 fixiert werden. Hierdurch kann die Maschine schnell von einer geschlossenen Maschine in eine offene Maschine gewandelt werden.

Zur weiteren Erhöhung der Kühlleistung können am Ende der Durchbrüche 13 an der Innenseite der Lagerschilde Luftleitbleche zur zielgerichteten Luftführung innerhalb des Elektromotors 1 angeordnet sein.

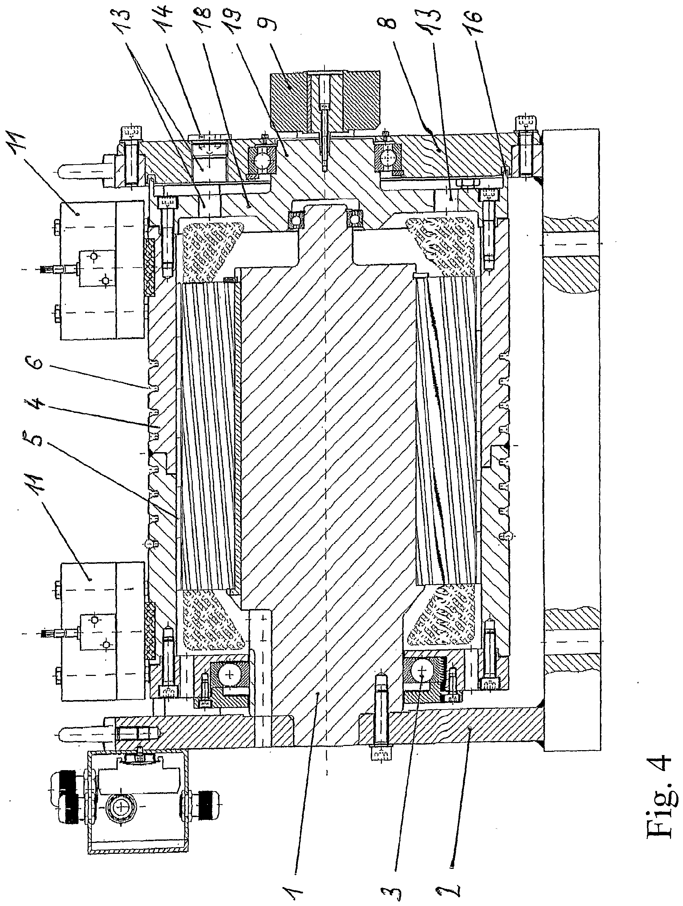

In einer Variante der Erfindung ist der Ständer des Elektromotors 1 zusätzlich neben der festen Verankerung auf der anderen Seite noch zusätzlich gelagert, wie in Fig. 4 dargestellt. Der Ständer des Elektromotors 1 ist also auf einer Seite an einer ersten Lagerendplatte 2 fest verankert und auf der gegenüberliegenden Seite im Lagerschild 18 des Außenläufers 4 gelagert. Der Außenläufer 4 ist auf dieser Seite durch einen Ansatz 19 des Lagerschildes 18 in einer zweiten Lagerendplatte 8 gelagert. Der Ständer des Elektromotors 1 auf der Seite der ersten Lagerendplatte 2 trägt ein Lager 3 des Außenläufers 4. Am Außenläufer 4 sind auch hier am inneren Umfang Permanentmagnete 5 und am äußeren Umfang Seilrillen 6 oder andere Treibmittel des Treibrohrs angeordnet. Der Ansatz 19 des Lagerschildes 18 schließt mit der Außenseite der Lagerendplatte 8 ab. An der Stirnseite des Ansatzes 19 des Lagerschildes 18 ein Geber 9 montiert.

An den Außenseiten der Lagerendplatten 2 und 8 sind keine der sonst üblichen Abdeck- und Abdichtdeckel oder -ringe im Bereich der Durchbrüche für den Ständer des Elektromotors 1 oder der Welle mit Ansatz 7 oder des Ansatzes 19 des Lagerschildes 18 vorgesehen.

Zur Vereinfachung der Technologie der Fertigung beim Rollieren des Außenläufers 4 als Treibrohr kann das Treibrohr aus mindestens zwei Hohlzylinderteilen bestehen, wobei die Hohlzylinderteile an ihren Stoßstellen jeweils einen Bund besitzen. Der Bund am jeweils anderen Hohlzylinderteil ist spiegelverkehrt ausgeführt. Damit greift ein Hohlzylinderteil über das andere Hohlzylinderteil, wobei beide Hohlzylinderteile nach dem Zusammenfügen am Außenumfang verschweißt werden und somit eine ausreichende Stabilität erreicht wird.

## Patentansprüche

1. Getriebeloses und kompaktes Aussenläuferantriebssystem insbesondere für Personen-und Lastenaufzüge, welches einen Elektromotor (1) und eine erste und eine zweite Lagerendplatte (2,8) umfasst, die auf einer gemeinsamen Grundplatte stehen, und wobei die Lagerendplatten (2, 8) sich auf den gegenüberliegenden Seiten des Ständers des Elektromotors (1) befinden, wobei der Ständer des Elektromotors (1) auf einer Seite an der ersten Lagerendplatte (2) fest verankert ist und dieser Ständer des Elektromotors (1) auf der Seite der ersten Lagerendplatte (2) ein Lager (3) des Aussenläufers (4) des Elektromotors (1) trägt, am Aussenläufer (4) am inneren Umfang Permanentmagnete (5) und am äusseren Umfang Seilrillen (6) oder andere Treibmittel eines Treibrohrs angeordnet sind und der Aussenläufer (4) auf der anderen Seite durch eine Welle mit Ansatz (7) in der zweiten Lagerendplatte (8) gelagert ist.

2. Getriebeloses und kompaktes Aussenläuferantriebssystem insbesondere für Personen-und Lastenaufzüge, welches einen Elektromotor (1) und eine erste und zweite Lagerendplatten (2,8) umfasst, die auf einer gemeinsamen Grundplatte stehen, und wobei die Lagerendplatten (2, 8) sich auf den gegenüberliegenden Seiten des Ständers des Elektromotors (1) befinden, wobei der Ständer des Elektromotors (1) auf einer Seite an der ersten Lagerendplatte (2) fest verankert und auf der gegenüberliegenden Seite im Lagerschild (18) des Aussenläufers (4) gelagert ist und dieser Ständer des Elektromotors (1) auf der Seite der ersten Lagerendplatte (2) ein Lager (3) des Aussenläufers (4) des Elektromotors (1) trägt, am Aussenläufer (4) am inneren Umfang Permanentmagnete (5) und am äusseren Umfang Seilrillen (6) oder andere Treibmittel eines Treibrohrs angeordnet sind und der Aussenläufer (4) auf der anderen Seite durch einen Ansatz (19) des Lagerschildes (18) in der zweiten Lagerendplatte (8) gelagert ist.

3. Getriebeloses und kompaktes Aussenläuferantriebssystem nach einem der vorhergehenden Ansprüche, **dadurch gekennzeichnet, dass** die Welle mit Ansatz (7) oder den Ansatz (19) des Lagerschildes (18) durch die zweite Lagerendplatte (8) hinduchgeführt ist und an der Aussenseite eine zusätzliche Treibscheibe trägt.

4. Getriebeloses und kompaktes Aussenläuferantriebssystem nach einem der vorhergehenden Ansprüche, **dadurch gekennzeichnet, dass** am Wellenende des Ständers des Elektromotors (1) im Bereich der ersten Lagerendplatte (2) ein Geber (9) montiert und mit einer drehmomentenstabilen Geberwelle (10) verbunden ist, die durch ein Durchgangsloch des Ständers des Elektromotors (1) bis zur Welle mit Ansatz (7) oder Ansatzes (19) des Lagerschildes (18) geführt und dort fest verbunden ist.

5. Getriebeloses und kompaktes Aussenläuferantriebssystem nach Anspruch 4, **dadurch gekennzeichnet, dass** die Geberwelle (10) in gewissen Abständen Durchmesserverjüngungen besitzt.

6. Getriebeloses und kompaktes Aussenläuferantriebssystem nach Anspruch 2, **dadurch gekennzeichnet, dass** der Ansatz (19) des Lagerschildes (18) mit der Aussenseite der Lagerendplatte (8) abschliesst und an der Stirnseite des Ansatzes (19) des Lagerschildes (18) ein Geber (9) montiert ist.

7. Getriebeloses und kompaktes Aussenläuferantriebssystem nach einem der vorhergehenden Ansprüche, **dadurch gekennzeichnet, dass** an den Aussenseiten der Lagerendplatten (2,8) keine Abdeck-und Abdichtdeckel oder-ringe im Bereich der Durchbrüche für den Ständer des Elektromotors (1) oder der Welle mit Ansatz (7) oder des Ansatzes (19) des Lagerschildes (18) vorgesehen sind.

8. Getriebeloses und kompaktes Aussenläuferantriebssystem nach einem der vorhergehenden Ansprüche, **dadurch gekennzeichnet, dass** unterhalb, innerhalb und/oder oberhalb des Treibrohrs elektromagnetische Vorrichtungen zur Erzeugung eines Elektromagnetfeldes (12) am Nutgrund der Seilrillen (6) des Treibrohrs angeordnet sind.

9. Getriebeloses und kompaktes Aussenläuferantriebssystem nach einem der vorhergehenden Ansprüche, **dadurch gekennzeichnet, dass** die Kabelzuführung für die Wicklung des Ständers des Elektromotors (1) durch das Ständerblechpaket unterhalb des Lagers (3) und durch die erste Lagerendplatte (2) geführt ist.

10. Getriebeloses und kompaktes Aussenläuferantriebssystem nach einem der vorhergehenden Ansprüche, **dadurch gekennzeichnet, dass** die Bremsen (11) an der Aussenseite am Aussenläufer (4) am Kulminationspunkt und/oder am Umfang verteilt angeordnet sind.

11. Getriebeloses und kompaktes Aussenläuferantriebssystem nach einem der vorhergehenden Ansprüche, **dadurch gekennzeichnet, dass** an der Welle mit Ansatz (7) oder des Ansatzes (19) des Lagerschildes (18) ausserhalb des Elektromotors (1) und der Lagerendplatte (8) eine Bremse (11) und/oder im Inneren des Elektromotors (1) zwischen der Lagerendplatte (8) und dem Aussenläufer (4) mindestens eine Innenbremse (15) angeordnet ist.

12. Getriebeloses und kompaktes Aussenläuferantriebssystem nach einem der vorhergehenden Ansprüche, **dadurch gekennzeichnet**, die erste Lagerendplatte (2), an der der Ständer des Elektromotors (1) fest verankert ist, und/oder das dazugehörige Lagerschild des Aussenläufers (4) über dem Lager (3) Durchbrüche (13) besitzt.

13. Getriebeloses und kompaktes Aussenläuferantriebssystem nach einem der vorhergehenden Ansprüche, **dadurch gekennzeichnet, dass** die zweite Lagerendplatte (8) und/oder das dahinterliegende Lagerschild des Aussenläufers (4) Durchbrüche (13) besitzt.

14. Getriebeloses und kompaktes Aussenläuferantriebssystem nach einem der vorhergehenden Ansprüche, **dadurch gekennzeichnet, dass** zwischen Lagerendplatte (2,8) und Elektromotor (1) im Aussenbereich Abdichtungen (16) angeordnet sind.

15. Getriebeloses und kompaktes Aussenläuferantriebssystem nach einem der vorhergehenden Ansprüche, **dadurch gekennzeichnet, dass** die Durchbrüche (13) an der Innenseite der Lagerendplatten (2,8) oder an der Aussenseite der Lagerschilde abnehmbare Abdeckungen (14) besitzen und diese Abdeckungen (14) an speziellen Fixierpunkten am Antriebssystem fixierbar sind.

16. Getriebeloses und kompaktes Aussenläuferantriebssystem nach einem der vorhergehenden Ansprüche, **dadurch gekennzeichnet, dass** am Ende der Durchbrüche (13) an der Innenseite der Lagerschilde Luftleitbleche angeordnet sind.

17. Getriebeloses und kompaktes Aussenläuferantriebssystem nach einem der vorhergehenden Ansprüche, **dadurch gekennzeichnet, dass** der Aussenläufer (4) als Treibrohr mindestens aus zwei Hohlzylinderteilen besteht, wobei die Hohlzylinderteile an ihren Stossstellen jeweils einen Bund besitzen, der jedoch jeweils am anderen Hohlzylinderteil spiegelverkehrt ausgeführt ist.

## Claims

1. Gearless and compact external rotor drive system, in particular for passenger and freight elevators, which comprises an electric motor (1) and a first and a second bearing end plate (2, 8), which stand on a common base plate, and wherein the bearing end plates (2, 8) are located on the opposite sides of the stator of the electric motor (1), wherein the stator of the electric motor (1) is anchored in a fixed manner on one side to the first bearing end plate (2) and said stator of the electric motor (1) carries a bearing (3) of the external rotor (4) of the electric motor (1) on the side of the first bearing end plate (2), permanent magnets (5) are positioned on the inner periphery of the external rotor (4) and cable grooves (6) or other drive means of a drive tubing are positioned on the outer periphery of said rotor, and the external rotor (4) is mounted on the other side in a second bearing end plate (8) by means of a shaft with a projection (7).

2. Gearless and compact external rotor drive system, in particular for passenger and freight elevators, which comprises an electric motor (1) and a first and a second bearing end plate (2, 8), which stand on a common base plate, and wherein the bearing end plates (2, 8) are located on the opposite sides of the stator of the electric motor (1), wherein the stator of the electric motor (1) is anchored in a fixed manner on one side to the first bearing end plate (2) and mounted on the opposite side in the bearing bracket (18) of the external rotor (4), and said stator of the electric motor (1) carries a bearing (3) of the external rotor (4) of the electric motor (1) on the side of the first bearing end plate (2), permanent magnets (5) are positioned on the inner periphery of the external rotor (4) and cable grooves (6) or other drive means of a drive tubing are positioned on the outer periphery of said rotor, and the external rotor (4) is mounted on the other side in the second bearing end plate (8) by means of a projection (19) of the bearing bracket (18).

3. Gearless and compact external rotor drive system according to one of the previous claims, **characterized in that** the shaft with the projection (7) or the projection (19) of the bearing bracket (18) is guided through the second bearing end plate (8) and carries an additional traction sheave on the outside.

4. Gearless and compact external rotor drive system according to one of the previous claims, **characterized in that** an encoder (9) is mounted on the shaft end of the stator of the electric motor (1) in the region of the first bearing end plate (2) and is connected to a torque-stable encoder shaft (10) which is guided through a through hole of the stator of the electric motor (1) to the shaft with the projection (7) or the projection (19) of the bearing bracket (18) and is firmly connected thereto.

5. Gearless and compact external rotor drive system according to claim 4, **characterized in that** the encoder shaft (10) has diameter taperings at specific intervals.

6. Gearless and compact external rotor drive system according to claim 2, **characterized in that** the projection (19) of the bearing bracket (18) ends with the outer side of the bearing end plate (8), and an encoder (9) is mounted on the front side of the projection (19) of the bearing bracket (18).

7. Gearless and compact external rotor drive system according to one of the previous claims, **characterized in that**, on the outer sides of the bearing end plates (2, 8), no cover and sealing lids or rings are provided in the region of the bores for the stator of the electric motor (1) or the shaft with the projection (7) or the projection (19) of the bearing bracket (18).

8. Gearless and compact external rotor drive system according to one of the previous claims, **characterized in that** electromagnetic devices for generating an electromagnetic field (12) are arranged below, within and/or above the drive tubing at the groove base of the cable grooves (6) of the drive tubing.

9. Gearless and compact external rotor drive system according to one of the previous claims, **characterized in that** the cable feed for the winding of the stator of the electric motor (1) is guided through the stator core stack below the bearing (3) and through the first bearing end plate (2).

10. Gearless and compact external rotor drive system according to one of the previous claims, **characterized in that** the brakes (11) are arranged on the outer side on the external rotor (4) at the culmination point and/or distributed on the periphery.

11. Gearless and compact external rotor drive system according to one of the previous claims, **characterized in that** a brake (11) is arranged on the shaft with the projection (7) or the projection (19) of the bearing bracket (18) outside of the electric motor (1) and the bearing end plate (8) and/or at least one inner brake (15) is arranged inside the electric motor (1) between the bearing end plate (8) and the external rotor (4).

12. Gearless and compact external rotor drive system according to one of the previous claims, **characterized in that** the first bearing end plate (2), on which the stator of the electric motor (1) is anchored in a fixed manner, and/or the associated bearing bracket of the external rotor (4) contains bores (13) above the bearing (3).

13. Gearless and compact external rotor drive system according to one of the previous claims, **characterized in that** the second bearing end plate (8) and/or the bearing bracket of the external rotor (4) behind said bearing end plate has bores (13).

14. Gearless and compact external rotor drive system according to one of the previous claims, **characterized in that** seals (16) are arranged in the external region between the bearing end plate (2, 8) and the electric motor (1).

15. Gearless and compact external rotor drive system according to one of the previous claims, **characterized in that** the bores (13) on the inner side of the bearing end plates (2, 8) or on the outer side of the bearing brackets have removable covers (14), and said covers (14) can be securely fastened to specific fastening points on the drive system.

16. Gearless and compact external rotor drive system according to one of the previous claims, **characterized in that** air baffles are arranged at the end of the bores (13) on the inner side of the bearing brackets.

17. Gearless and compact external rotor drive system according to one of the previous claims, **characterized in that** the external rotor (4) as a drive tubing consists of at least two hollow cylinder parts, wherein the hollow cylinder parts each have a collar at their abutment points, but each of which is designed to be mirror-inverted on the other hollow cylinder part.

## Revendications

1. Système d'entraînement de rotor externe sans engrenage, compact, destiné notamment à des ascenseurs et à des monte-charges, comprenant un moteur électrique (1) et une première et une seconde plaques d'extrémité de montage (2, 8) reposant sur une plaque de base commune, et dans lequel les plaques d'extrémité de montage (2, 8) se trouvent sur les côtés opposés de l'induit du moteur électrique (1), dans lequel l'induit du moteur électrique (1) est ancré solidement sur un côté de la première plaque d'extrémité de montage (2) et ledit induit du moteur électrique (1) comporte un palier (3) du rotor externe (4) du moteur électrique (1) sur le côté de la première plaque d'extrémité de montage (2), des aimants permanents (5) sont placés sur le rotor externe (4) au niveau de la périphérie intérieure et des rainures (6) ou d'autres moyens d'entraînement d'un tube d'entraînement sont placés au niveau de la périphérie extérieure, et le rotor externe (4) est monté sur l'autre côté par un arbre comportant une partie saillante (7) dans la seconde plaque d'extrémité de montage (8).

2. Système d'entraînement de rotor externe sans engrenage, compact, destiné notamment à des ascenseurs et à des monte-charges, comprenant un moteur électrique (1) et une première et une seconde plaques d'extrémité de montage (2, 8) reposant sur une plaque de base commune, et dans lequel les plaques d'extrémité de montage (2, 8) se trouvent sur les côtés opposés de l'induit du moteur électrique (1), dans lequel l'induit du moteur électrique (1) est ancré solidement sur un côté de la première plaque d'extrémité de montage (2) et est monté sur le côté opposé dans le flasque (18) du rotor externe (4) et ledit induit du moteur électrique (1) comporte un palier (3) du rotor externe (4) du moteur électrique (1) sur le côté de la première plaque d'extrémité de montage (2), des aimants permanents (5) sont placés sur le rotor externe (4) au niveau de la périphérie intérieure et des rainures (6) ou d'autres moyens d'entraînement d'un tube d'entraînement sont placés au niveau de la périphérie extérieure, et le rotor externe (4) est monté sur l'autre côté par une partie saillante (19) du flasque (18) dans la seconde plaque d'extrémité de montage (8).

3. Système d'entraînement de rotor externe sans engrenage et compact selon l'une des revendications précédentes, **caractérisé en ce que** l'arbre comportant la saillie (7) ou la saillie (19) du flasque (18) est guidé à travers la seconde plaque d'extrémité de montage (8) et comporte une poulie de traction supplémentaire sur le côté extérieur.

4. Système d'entraînement de rotor externe sans engrenage et compact selon l'une des revendications précédentes, **caractérisé en ce qu'**un transmetteur (9) est monté sur l'extrémité de l'arbre de l'induit du moteur électrique (1) dans la zone de la première plaque d'extrémité de montage (2) et est relié à un arbre de transmetteur (10) stable au couple qui est guidé à travers un trou de passage de l'induit du moteur électrique (1) jusqu'à l'arbre comportant une saillie (7) ou la saillie (19) du flasque (18) et y est solidement relié.

5. Système d'entraînement de rotor externe sans engrenage et compact selon la revendication 4, **caractérisé en ce que** l'arbre de transmetteur (10) possède des diamètres coniques à certains intervalles.

6. Système d'entraînement de rotor externe sans engrenage et compact selon la revendication 2, **caractérisé en ce que** la saillie (19) du flasque (18) se termine par le côté extérieur de la plaque d'extrémité de montage (8) et **en ce qu'**un transmetteur (9) est monté sur le côté avant de la saillie (19) du flasque (18).

7. Système d'entraînement de rotor externe compact et sans engrenage selon l'une des revendications précédentes, **caractérisé en ce que**, sur les côtés extérieurs des plaques d'extrémité de montage (2, 8), il n'y a pas de couvercles ou d'anneaux de recouvrement et d'étanchéité dans la zone des ouvertures pour l'induit du moteur électrique (1) ou de l'arbre comportant une saillie (7) ou de la saillie (19) du flasque (18).

8. Système d'entraînement de rotor externe sans engrenage et compact selon l'une des revendications précédentes, **caractérisé en ce que** des dispositifs électromagnétiques pour la génération d'un champ électromagnétique (12) sont placés en dessous, à l'intérieur et/ou au-dessus du tube d'entraînement au fond des rainures (6) du tube d'entraînement.

9. Système d'entraînement de rotor externe sans engrenage et compact selon l'une des revendications précédentes, **caractérisé en ce que** l'amenée de câble pour l'enroulement de l'induit du moteur électrique (1) est guidée à travers le paquet de tôles d'induit sous le palier (3) et à travers la première plaque d'extrémité de montage (2).

10. Système d'entraînement de rotor externe sans engrenage et compact selon l'une des revendications précédentes, **caractérisé en ce que** les freins (11) sont placés sur le côté extérieur du rotor externe (4) au niveau du point culminant et/ou sont répartis sur la périphérie.

11. Système d'entraînement de rotor externe compact et sans engrenage selon l'une des revendications précédentes, **caractérisé en ce qu'**un frein (11) est placé au niveau de l'arbre comportant la saillie (7) ou de la saillie (19) du flasque (18) à l'extérieur du moteur électrique (1) et de la plaque d'extrémité de montage (8) et/ou **en ce qu'**au moins un frein interne (15) est placé à l'intérieur du moteur électrique (1) entre la plaque d'extrémité de montage (8) et le rotor externe (4).

12. Système d'entraînement de rotor externe sans engrenage et compact selon l'une des revendications précédentes, **caractérisé en ce que** la première plaque d'extrémité de montage (2), sur laquelle l'induit du moteur électrique (1) est solidement ancré, et/ou le flasque associé du rotor externe (4) possède des ouvertures (13) au-dessus du palier (3).

13. Système d'entraînement de rotor externe sans engrenage et compact selon l'une des revendications précédentes, **caractérisé en ce que** la seconde plaque d'extrémité de montage (8) et/ou le flasque du rotor externe (4) se trouvant derrière celle-ci possède des ouvertures (13).

14. Système d'entraînement de rotor externe sans engrenage et compact selon l'une des revendications précédentes, **caractérisé en ce que** des joints d'étanchéité (16) sont placés entre la plaque d'extrémité de montage (2, 8) et le moteur électrique (1) dans la zone extérieure.

15. Système d'entraînement de rotor externe sans engrenage et compact selon l'une des revendications précédentes, **caractérisé en ce que** les ouvertures (13) sur le côté intérieur des plaques d'extrémité de montage (2, 8) ou sur le côté extérieur des flasques possèdent des couvercles amovibles (14) et **en ce que** lesdits couvercles (14) peuvent être fixés à des points de fixation spéciaux au niveau du système d'entraînement.

16. Système d'entraînement de rotor externe sans engrenage et compact selon l'une des revendications précédentes, **caractérisé en ce que** des déflecteurs d'air sont placés à l'extrémité des ouvertures (13) sur le côté intérieur des flasques.

17. Système d'entraînement de rotor externe sans engrenage et compact selon l'une des revendications précédentes, **caractérisé en ce que** le rotor externe (4) est constitué en tant que tube d'entraînement d'au moins deux parties cylindriques creuses, dans lequel les parties cylindriques creuses possèdent chacune un collier au niveau de leurs points de jonction, lequel collier est cependant réalisé en image inversée au niveau de l'autre partie cylindrique creuse.
